# EUROPÄISCHE PATENTSCHRIFT

(11) **EP 1 225 099 B1**
(45) Veröffentlichungstag und Bekanntmachung des Hinweises auf die Patenterteilung: **25.05.2005**
(21) Anmeldenummer: 01127982.5
(22) Anmeldetag: 24.11.2001
(51) Int. Cl.: B60R 21/01

(54) **Airbagsystem für Fahrzeuge**
Airbag system for vehicles
Système de coussin gonflable pour véhicules

(30) Priorität: 20.01.2001 DE 10102646
(43) Veröffentlichungstag der Anmeldung: 24.07.2002
(73) Patentinhaber: Bayerische Motoren Werke Aktiengesellschaft, 80809 München (DE)
(72) Erfinder: Haeuslmeier, Kurt, 81927 München (DE); Diepold, Gisela, 82205 Gilching (DE)

(56) Entgegenhaltungen:
- EP-A- 0 733 519
- EP-A- 0 879 739
- EP-A- 0 900 702
- US-A- 5 934 705
- US-A- 6 056 079

## Beschreibung

Die Erfindung betrifft ein Airbagsystem für Fahrzeuge mit einem Airbag und einer Auslöseanordnung, die bei einem als den Aufprall auf ein Hindernis zu interpretierenden Ereignis den Airbag mit Gas befüllt, wobei die Auslöseanordnung zwei unabhängig voneinander auslösbare Kammern aufweist, deren jede den Airbag zu befüllen vermag und die erste Kammer den Airbag stark zu befüllen vermag als die andere, zweite Kammer, wobei nach Auslösen der ersten Kammer die zweite Kammer zeitversetzt ausgelöst wird.

Airbagsysteme zum Schutz der Insassen eines Kraftfahrzeuges bei Unfällen sind inzwischen Standard. Üblicherweise wird mittels eines am Fahrzeugrahmen vorgesehenen Beschleunigungssensors erfaßt, ob eine als Aufprall auf ein Hindernis zu interpretierende abrupte Verzögerung des Fahrzeuges auftritt. Im gegebenen Fall wird ein zusammengefalteter Airbag durch Auslösen bzw. Zünden einer Treibladung in Sekundenbruchteilen mit Gas befüllt, um den Körper des Insassen aufzufangen und diesen damit vor nachhaltigen Verletzungen zu bewahren. Solche Airbagsysteme haben sich bewährt. Jedenfalls bei Fahrzeugen der gehobenen Mittelklasse werden bereits zweistufige Airbagsysteme vorgesehen, bei denen die Auslöseanordnung zwei Kammern aufweist, die eine asymmetrische Verteilung der jeweiligen Treibladung besitzen. Herkömmlich wird zunächst die Treibkammer mit höherer Treibladung (z. B. 70%) ausgelöst und zeitversetzt dazu dann die andere Kammer mit entsprechend niedrigerer Treibladung (z. B. 30%) ausgelöst. Den Zeitversatz variabel zu gestalten, und zwar abhängig von der mittels entsprechender Sensoren erfaßten und bewerteten Unfall- oder Crashschwere, ist an sich bekannt (EP0950582A2).

Es hat sich gezeigt, dass für bestimmte Unfallsituationen diese herkömmlichen Airbagsysteme keinen optimalen Schutz der Insassen des verunfallten Fahrzeuges gewährleisten können. Insbesondere bei der sogenannten OoP-Situation eines Insassen (OoP: out-of-position), bei der sich der betroffene Insasse in seiner Position von der eines durchschnittlichen - oder Norm-Insassen unterscheidet, treten hohe Belastungen auf den Insassen auf. In der OoP-Situation befindet sich der Insasse in aller Regel zu nahe an dem Airbagsystem, z. B. durch dem Crash bzw. dem Aufprall vorangegangene Bremsvorgänge. Insbesondere ungesicherte Kinder auf dem Beifahrersitz gehören zu dem gefährdeten Kreis, die sich im unmittelbaren Entfaltungsbereich des Beifahrer-Airbags befinden können. Um Insassen in der OoP-Situation bei einem Aufprall schützen zu können, ist bereits vorgeschlagen worden, die erste Kammer mit einer geringeren Treibladung zu versehen als die zweite Kammer (DE195510980A1, EP0958974A2). Dies ist allerdings nachteilig, wenn sich der Insasse in der durchschnittlichen oder Norm-Position befindet.

Aus der gattungsbildenden EP 733 519 A ist eine mehrstufige Airbag-Aufblasvorrichtung mit einem Gehäuse bekannt, das zwei getrennte, unterschiedlich große Kammem aufweist. Jede der Kammern weist eine Gaserzeugungseinrichtung und eine Zündeinrichtung auf. Eine Electronic-Control-Unit ECU überwacht Mehrfach-Sensoren, die mit einem Beschleunigungssensor, einem Temperatur-Sensor für den Fahrer, einen Temperatur-Sensor für den Beifahrer, einen Anschnallschalter-Sensor für den Fahrer, einen Anschnallschalter-Sensor für den Beifahrer, einen "Nicht-mehr-auf-dem-Sitz"-Sensor für den Fahrer, einen "Nicht-mehr-auf-dem-Sitz"-Sensor für den Beifahrer und einen optionalen Sitzplatzbelegungs-Sensor für den Beifahrer versehen sind. Die ECU identifiziert, wie bei einem Block 406 angezeigt, die Schwere oder Art des Zusammenstoßes. Danach bestimmt die ECU, ob die Zündkapseln beider Kammern in vorbestimmter zeitlicher Abfolge aktiviert werden oder ob lediglich eine der beiden Zündkapseln aktiviert wird.

Ausgehend hiervon ist es Aufgabe der vorliegenden Erfindung ein Airbagsystem anzugeben, das in jeder Unfallsituation für den betroffenen Insassen optimal wirkt.

Die Aufgabe wird erfindungsgemäß durch die Merkmale des Anspruches 1 gelöst.

Die Erfindung wird durch die Merkmale der Unteransprüche weitergebildet.

Die Erfindung zieht Nutzen daraus, dass bereits jetzt bei Fahrzeugen der Oberklasse und der gehobenen Mittelklasse zahlreiche personenspezifische Größen, aber auch besondere unfallspezifische Größen mittels Sensoren erfaßt werden, wie etwa die Sitzposition, Gewicht, Größe, die Rückhaltegurt-Verriegelungsstellung, usw.. Typische unfallspezifische Größen sind die Ist-Geschwindigkeit des Fahrzeuges und die Relativgeschwindigkeit des Fahrzeuges gegenüber einem vorausfahrenden Fahrzeug, sowie die Art des Crashverlaufs.

Die erfindungsgemäße Invertierbarkeit der Zünd-Reihenfolge der Treibladungen der beiden Kammern ist daher in einfacher Weise implementierbar.

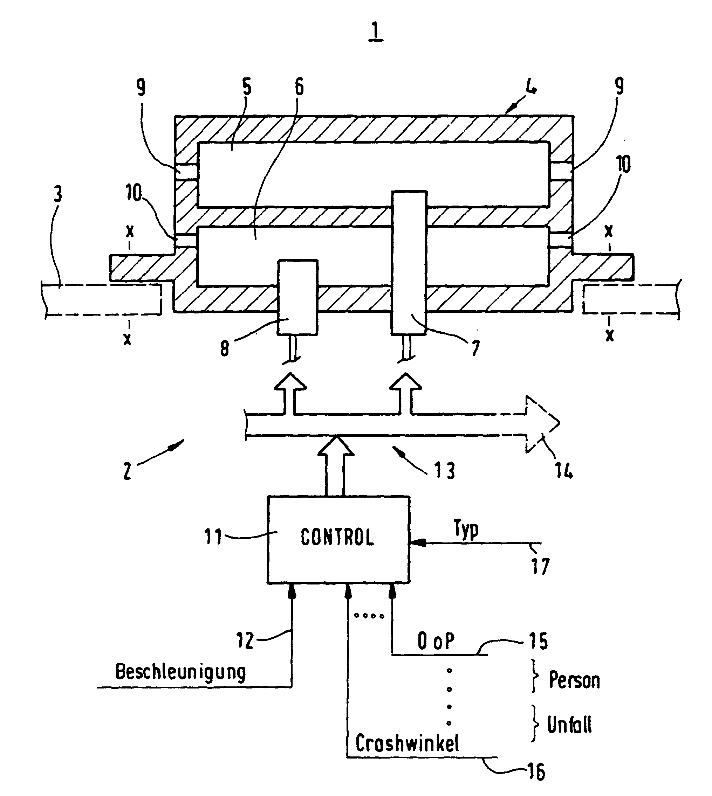

Die Erfindung wird anhand des in der einzigen Figur dargestellten schematischen Ausführungsbeispieles näher erläutert.

Die Zeichnung zeigt schematisch die Auslöseanordnung 2 eines Airbagsystems 1. Das Airbagsystem 1 weist in üblicher Weise einen nicht dargestellten gefalteten Airbag in einem fahrzeugseitigen, durch Strichlinien angedeuteten Gehäuse 3 auf. In dem Gehäuse ist eine Auslöseeinheit 4 befestigt, die zwei voneinander getrennte Kammern 5 und 6 für eine jeweilige Treibladung enthält. Die erste Kammer 5 ist über einen ersten Zündsatz 7 auslös- bzw. zündbar, und die zweite Kammer 6 ist über einen zweiten Zündsatz 8 unabhängig von einer Zündung der ersten Kammer 5 auslösbar. Jede der Kammern 5, 6 weist jeweilige Ausblasöffnungen 9 bzw. 10 auf.

Eine Auslösesteuerung 11 empfängt von einem nicht dargestellten, am Fahrzeugrahmen befestigten Beschleunigungssensor ein Beschleunigungssignal 12, vergleicht dieses mit einem in der Steuerung 11 gespeicherten Schwellenwert und interpretiert bei Überschreiten des Schwellenwertes das dieses Beschleunigungssignal 12 verursachende Ereignis als Aufprall, der ein rasches Füllen des Airbags mit Gas durch Zünden der Treibladungen in den Kammern 5 und 6 auslöst. Der Schwellenwert ist dabei so bemessen, dass bei einer Notbremsung der Airbag noch nicht befüllt wird.

Im gegebenen Fall gibt die Auslösesteuerung 11 ein erstes Zündsignal an den der Kammer mit der größeren Treibladung, hier der ersten Kammer 5, zugeordneten Zündsatz, hier den ersten Zündsatz 7, ab und zeitversetzt dazu ein Zündsignal an den zweiten Zündsatz 8 für die Treibladung kleinerer Mengen in der zweiten Kammer 6, wodurch der Airbag zweistufig zunächst mit dem höheren Gasanteil und in der Endphase mit dem kleineren Gasanteil befüllt wird. Die Zufuhr der Zündsignale an die Zündsätzen 7 und 8 ist schematisch durch ein Bussystem 13 dargestellt. Durch Strichlinien 14 ist ferner dargestellt, dass weitere Rückhaltesysteme wie Gurtstraffer, Seitenairbags und dergleichen in gleicher Weise von der Auslösesteuerung 11 aus im gegebenen Fall angesteuert werden können.

Das Fahrzeug enthält ferner weitere Sensoren (nicht im einzelnen dargestellt), die personenspezifische Größen der Insassen bzw. der jeweiligen Sitzplätze erfaßt wie die Einstellung eines Sitzes die für die Sitzposition und damit der Personentyp kennzeichnend ist, also ob der Insasse groß oder klein ist, ein Gewichtssignal, also ob die Person schwer oder leicht ist, insbesondere auch, ob der Sitz von einer Person besetzt ist, und dergleichen personenspezifische Größen. Ein entsprechendes Signal 15 wird der Auslösesteuerung 11 wesentlich zugeführt.

Ferner ist es zweckmäßig auch unfallspezifische Größen zu erfassen. Beispielsweise kann der Auslösesteuerung 1 ein Signal 16 zugeführt werden, das den Crashwinkel erfaßt, also den von einer spezifizierten Achse, im allgemeinen der Längsachse des Fahrzeuges, abweichenden Richtung der Hauptkomponente der beim Aufprall einwirkenden Kraft. Ferner ist es zweckmäßig auch die Ist-Geschwindigkeit des Fahrzeuges, die Relativgeschwindigkeit des Fahrzeuges gegenüber einem vor dem Fahrzeug befindlichen Gegenstand, im allgemeinen ein vorausfahrendes Fahrzeug, zu erfassen und entsprechende Signale der Auslösesteuerung 11 zuzuführen. Ferner werden der Auslösesteuerung 11 spezifische Größen bezüglich des Fahrzeugtypes zugeführt bzw. sie sind in diesem fest gespeichert wie durch ein Typ-Signal 17 angedeutet. Diese der Auslösesteuerung 11 zugeführten unfallspezifischen Größen und personenspezifischen Größen werden unter Berücksichtigung des Fahrzeugtypes in der Auslösesteuerung 11 ausgewertet. Aufgrund der Auswertung kann nicht nur, wie an sich bekannt, der Zeitversatz zwischen der Zündung der beiden Zündsätze 7 und 8 variabel eingestellt werden, sondern es wird auch festgestellt, ob eine besondere Unfallsituation vorliegt, bei der es zum Schutz des Insassen zweckmäßiger wäre, den Airbag zunächst mit dem kleineren Gasanteil und erst mit Zeitversatz anschließend mit dem höheren Gasanteil zu befüllen. Im gegebenen Fall werden die entsprechenden Signale an die Zündsätze 7 und 8 in invertierter Reihenfolge abgegeben, sodass zuerst die Treibladung in der zweiten Kammer 6 gezündet wird und erst mit entsprechendem Zeitversatz die größere Treibladung in der ersten Kammer 5.

Durch die unterschiedliche Zündreihenfolge der Kammern 5 und 6 der zweistufigen Auslöseeinheit 4 lassen sich demnach für die jeweilige Unfallsituation die Belastungswerte der Insassen an die jeweilige Unfallsituation angepaßt auf die jeweils günstigeren Werte reduzieren. Dies ist insbesondere in der OoP-Situation von wesentlicher Bedeutung. Ferner sind mehr Freiheitsgrade bei der Optimierung zur Auslösung des Airbags nämlich hinsichtlich einer Anpassung an alle vorkommenden Unfallsituationen möglich.

Damit sind darüber hinaus die ab dem Jahr 2003 aufgrund der Vorschrift FMVSS 208 erforderlichen Prüfungen für die OoP-Situation, insbesondere für US-Fahrzeuge, für Fahrer- und Beifahrerseite, erfüllbar.

### Bezugszeichenliste

- 1.: Airbagsystem
- 2.: Auslöseanordnung
- 3.: Gehäuse
- 4.: Auslöseeinheit
- 5.: erste Kammer
- 6.: zweite Kammer
- 7.: erster Zündsatz
- 8.: zweiter Zündsatz
- 9.: erste Ausblasöffnung
- 10.: zweite Ausblasöffnung
- 11.: Auslösesteuerung
- 12.: Beschleunigungssignal
- 13.: Bussystem
- 14.: Pfeil
- 15.: OoP-Signal
- 16.: Crashwinkel-Signal
- 17.: (Fahrzeug) Typ-Signal

## Patentansprüche

1. Airbagsystem für Fahrzeuge mit einem Airbag und einer Auslöseanordnung (2), die bei einem als den Aufprall auf ein Hindernis zu interpretierenden Ereignis den Airbag mit Gas befüllt,
wobei die Auslöseanordnung zwei unabhängig voneinander auslösbare Kammern (5, 6) aufweist, deren jede den Airbag zu füllen vermag, wobei die erste Kammer (5) den Airbag mit dem höheren Gasanteil zu befüllen vermag als die andere, zweite Kammer (6), wobei nach Auslösen der ersten Kammer (5) die zweite Kammer (6) zeitversetzt ausgelöst wird, und
das Fahrzeug Sensoren aufweist, mittels denen eine Out-of-Position-Erkennung erfolgt,
**dadurch gekennzeichnet,**
**dass** die Auslöseanordnung (2) bei Erfassen einer solchen besonderen Unfallsituation und Erfassen eines Auslösekriteriums (12) für den Airbag, die Kammern (5, 6) in invertierter Reihenfolge auslöst, und
der Zeitversatz zwischen den Auslösungen der beiden Kammern (5, 6) variabel ist und unter Berücksichtigung der Crashschwere und Art des Crashverlaufs eingestellt wird.

2. Airbagsystem nach Anspruch 1,
**dadurch gekennzeichnet, dass** durch die unterschiedliche Zündreihenfolge der Kammern (5, 6) für die jeweilige Unfallsituation die Belastungswerte der Insassen des Fahrzeugs an die jeweilige Unfallsituation angepasst und auf die jeweils günstigeren Werte reduziert werden.

3. Airbagsystem nach einem der Ansprüche 1 oder 2,
**dadurch gekennzeichnet, dass** durch die Sensoren neben der Out-of-Position (15) der Personentyp abhängig von Körpergröße, Körpergewicht, Sitzposition und dergleichen erfasst wird.

## Claims

1. An airbag system for vehicles, comprising an airbag and a triggering arrangement (2) which fills the airbag with gas after an event interpreted as a collision with an obstacle,
wherein the triggering arrangement has two independently triggerable chambers (5, 6) each capable of filling the airbag, wherein the first chamber (5) can fill the airbag with a higher proportion of gas than the other, second chamber (6), wherein after the first chamber (5) has been triggered the second chamber (6) is triggered after a delay, and
the vehicle comprises sensors for out-of-position recognition,
**characterised in that**
the triggering arrangement (2), after detecting a said special accident situation and determining a criterion (12) for triggering the airbag, triggers the chambers (5, 6) in the reverse sequence and
the time lag between triggering the two chambers (5, 6) is variable and is adjusted to allow for the severity of the crash and the nature of the crash process.

2. An airbag system according to claim 1, **characterised in that** owing to the different sequence in which the chambers (5, 6) are ignited for each respective accident situation, the stresses on the vehicle occupants are adjusted to the respective accident situation and reduced to the more favourable value in each case.

3. An airbag system according to claim 1 or 2, **characterised in that** in addition to the out-of-position (15), the sensors detect the type of person depending on body size, body weight, sitting position and the like.

## Revendications

1. Système de coussin gonflable pour véhicules comportant un coussin gonflable et un dispositif de déclenchement (2) qui, lors d'un événement devant être interprété comme un impact avec un obstacle, remplit le coussin gonflable de gaz,
le dispositif de déclenchement présentant deux chambres (5, 6) pouvant être déclenchées indépendamment l'une de l'autre, étant chacune en mesure de remplir le coussin gonflable, la première chambre (5) étant en mesure de remplir le coussin gonflable avec une proportion de gaz plus importante que l'autre, deuxième chambre (6), et après déclenchement de la première chambre (5), la deuxième chambre (6) étant déclenchée avec un décalage dans le temps, et dans lequel
le véhicule présente des capteurs au moyen desquels s'effectue une détection d'Out of Position,
**caractérisé en ce que**
lors de la détection d'une telle situation particulière d'accident et d'un critère de déclenchement (12) du coussin gonflable, le dispositif de déclenchement (2) déclenche les chambres (5, 6) en ordre inversé, et
le décalage dans le temps entre les déclenchements des deux chambres (5, 6) est variable et est réglé en prenant en compte la gravité de l'impact et le type du déroulement de l'impact.

2. Système de coussin gonflable selon la revendication 1,
**caractérisé en ce que**
grâce à l'ordre d'allumage différent des chambres (5, 6) pour la situation d'accident du moment, les valeurs de charge des occupants du véhicule sont adaptées à la situation d'accident du moment et réduites aux valeurs alors les plus favorables.

3. Système de coussin gonflable selon l'une quelconque des revendications 1 ou 2,
**caractérisé en ce que**
grâce aux capteurs, outre l'Out of Position (15), on détermine le type de la personne en fonction de la taille du corps, du poids du corps, de la position assise et similaires.
